## Europäisches Patentamt
## European Patent Office
## Office européen des brevets

(11) Veröffentlichungsnummer: **0 272 568 B1**

(12) **EUROPÄISCHE PATENTSCHRIFT**

(45) Veröffentlichungstag der Patentschrift: **29.04.92**

(51) Int. Cl.⁵: **C07F 9/09**

(21) Anmeldenummer: **87118450.3**

(22) Anmeldetag: **12.12.87**

Die Akte enthält technische Angaben, die nach dem Eingang der Anmeldung eingereicht wurden und die nicht in dieser Patentschrift enthalten sind.

(54) **Direktveresterung mit o-Phosphorsäure.**

(30) Priorität: **20.12.86 DE 3643763**

(43) Veröffentlichungstag der Anmeldung:
**29.06.88 Patentblatt 88/26**

(45) Bekanntmachung des Hinweises auf die Patenterteilung:
**29.04.92 Patentblatt 92/18**

(84) Benannte Vertragsstaaten:
**AT BE CH DE ES FR GB GR IT LI NL SE**

(56) Entgegenhaltungen:
**FR-A- 1 018 577**
**US-A- 4 061 695**

**Römpps Chemielexikon, 8. Auflage, Seite 1264, Stichwort "Fettalkohole"**

**Monographie "Fettalkohole", herausgegeben von Henkel KGaA, Düsseldorf, 2. Auflage 1982, Seiten 82 - 83**

**Ullmans Encyclopädie der technischen Chemie, 4. Auflage, Band 11, Weinheim / Ber-stra'e, 1976, Seiten 427 - 429**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Uphues, Günter**
**Robert-Koch-Strasse 45**
**W-4019 Monheim(DE)**
Erfinder: **Ploog, Uwe, Dr.**
**Haydnweg 6**
**W-5657 Haan(DE)**

**Beschreibung**

Die vorliegende Erfindung betrifft die direkte Veresterung von o-Phosphorsäure mit Fettalkoholen, alkoxylierten Fettalkoholen und Alkylphenolalkoxylaten in Gegenwart eines Wasserschleppmittels und wenigstens einer anorganischen oder organischen Base.

K. Sasse in "Houben-Weyl", Band 12, "Organische Phosphorverbindungen", Teil 2, Seite 143 beschreibt, daß die Veresterung von o-Phosphorsäure mit Hydroxyverbindungen über die Bildung von Di- oder Polyphosphorsäuren verläuft, die dann einer alkoholischen Spaltung unterliegen.

Aus Hollemann-Wiberg, "Lehrbuch der anorganischen Chemie", 83. bis 90. Auflage, Seite 453, 1976, ist beispielsweise bekannt, daß sich o-Phosphorsäure oberhalb von 200°C und unter intermolekularer Wasserabspaltung in Di-Phosphorsäure umwandelt, die ihrerseits oberhalb von 300°C unter weiterem Wasseraustritt auf dem Wege über noch höhere Polyphosphorsäuren in Metapolyphosphorsäure übergeht.

Da die Primärreaktion bevorzugt oberhalb von wenigstens 170°C abläuft, wird in einer Nebenreaktion aus dem entstandenen Ester Olefin abgespalten. Bedingt durch den höheren Dampfdruck der Olefine sinkt während der Veresterung die Reaktionstemperatur und eine weitere Esterbildung unterbleibt.

Die Olefinbildung ist vermutlich der Grund, weshalb sich keine Literaturangaben zur Direktveresterung von Fettalkoholen allein mit o-Phosphorsäure ohne die weitere Verwendung von phosphorhaltigen Substanzen finden lassen.

DE-OS 30 47 378 beschreibt ein Verfahren zur Veresterung unter Verwendung von o-Phosphorsäure. Die o-Phosphorsäure wird jedoch nicht allein, sondern zusammen mit Phosphorpentoxid verwendet.

Nach K. Sasse (loc. cit.) verläuft die Reaktion eines Fettalkohols mit o-Phosphorsäure bis zu einem Gleichgewicht, in dem die Konzentration gebildeter Ester dem Quadrat der Konzentration der Phosphorsäure nahezu proportional ist. Die Einstellung des Gleichgewichtes erfolgt bei niederen Alkoholen relativ schnell, nimmt aber mit zunehmender Kettenlänge des aliphatischen Restes rasch ab.

Aus der französischen Patentanmeldung FR-A-10 18 577, ist ein Verfahren zur Herstellung von Phosphorsäure-tert.-aminoalkylestern bekannt, bei dem man Orthophosphorsäure mit tert.-Aminoalkoholen in Gegenwart eines Wasserschleppmittels umsetzt.

Gemäß der Lehre der amerikanischen Patentschrift US 4,061,695 können polymere Phosphatester aus Phosphorsäure und/oder Polyphosphorsäure und aliphatischen Polyolen mit 2 bis 7 Kohlenstoffatomen und 2 bis 4 Hydroxylgruppen erhalten werden.

Der vorliegenden Erfindung lag die Aufgabe zugrunde, ein Verfahren zur Direktveresterung von o-Phosphorsäure mit Alkoholen zur Verfügung zu stellen, bei dem auf den zusätzlichen Einsatz von phosphorhaltigen Verbindungen verzichtet werden kann.

Ein weiteres Ziel der vorliegenden Erfindung bestand darin, sofern möglich, den nichtumgesetzten Alkohol ohne Olefinbildung destillativ aus dem Reaktionsgemisch zu entfernen.

Die nachfolgend im einzelnen beschriebene Erfindung besteht darin, ein Verfahren zur Herstellung von Phosphorsäurealkylestergemischen bereitzustellen, das dadurch gekennzeichnet ist, daß man 1 bis 5 Moläquivalente a) eines 6 bis 18 C-Atome und vorzugsweise geradkettigen oder verzweigtkettigen, 8 bis 18-C-Atomen aufweisenden Fettalkohols, b) dessen 1 bis 20 mol und vorzugsweise 1 bis 12 Ethylenoxid und/oder Propylenoxid aufweisenden Adduktes und/oder c) eines Adduktes von 1 bis 20 Mol Ethylenoxid und/oder Propylenoxid an Alkylphenole mit 8 bis 15 C-Atomen in den Alkylsubstituenten, beispielsweise Addukte von 1 bis 20 Mol Ethylenoxid und/ oder Propylenoxid an Nonylphenol mit einem Moläquivalent o-Phosphorsäure in Gegenwart von 0,05 bis 0,2 Moläquivalenten, bezogen auf die in der Reaktionsmischung enthaltene Menge an Phosphoratomen, einer basischen organischen Verbindungen und eines Wasserschleppmittels unter Auskreisen des Reaktionswassers direktverestert und gegebenenfalls in an sich bekannter Weise in die Alkalimetall-, Ammonium- oder Alkanol- aminsalze umwandelt.

Als Fettalkohole im Sinne der vorliegenden Erfindung werden u.a. angesehen: Hexylalkohol, 2-Ethylhexylalkohol, Heptylalkohol, Octylalkohol, Nonylalkohol, Isononylalkohol, Decylalkohol, Isodecylalkohol, Undecylalkohol, Dodecylalkohol, Tridecylalkohol, Isotridecylalkohol, Tetradecylalkohol, Pentadecylalkohol, Hexadecylalkohol, Heptadecylalkohol, Octadecylalkohol, Oleylalkohol, Elaidylalkohol und Isostearylalkohol.

Als basische organische Verbindung werden vorzugsweise Amine und Alkalihydroxide verwendet. Insbesondere verwendet werden Amine ohne zusätzliche funktionelle Gruppen im Molekulargewichtsbereich von 129 bis 297, beispielsweise Dimethylkokosamin sowie Kalium- und Natriumhydroxid.

Als Wasserschleppmittel im Sinne der vorliegenden Erfindung dient u.a. Toluol oder Xylol.

Ein weiteres Merkmal der vorliegenden Erfindung besteht darin, daß die Veresterung bei wenigstens 160 °C durchgeführt wird.

Ein weiteres Merkmal der vorliegenden Erfindung besteht darin, unumgesetzte Fettalkohole durch Vakuumdestillation direkt aus dem Reaktionsgemisch zu entfernen.

Erfindungsgemäß hergestellte Phosphorsäureester können nach bekannten Verfahren in ihre Alkalimetallsalze, Ammoniumsalze und Alkanolaminsalze umgesetzt werden. Diese werden in weitem Umfang als Reinigungsmittel, Emulgiermittel, antistatische Mittel und Rostschutzmittel oder dergleichen verwendet. Ein Vorteil des vorliegenden Verfahrens besteht darin, daß die Kondensationsreaktion deutlich beschleunigt wird. Weiterhin lassen sich relativ hohe Ausbeuten an Di- und Trialkylester erzielen, die bei einem Einsatz von Phosphorpentoxid nicht erreichbar wären. Gemäß einer Ausführungsform der vorliegenden Erfindung kann nichtumgesetzter Alkohol vor der Neutralisierung aus dem Reaktionsgemisch direkt, ohne Olefinbildung destillativ entfernt werden. Die erhaltenen Produkte sind sehr hell.

Beispiel 1

In einer mit Wasserabscheider, Rückflußkühler und Thermometer versehenen Rührapparatur wurden 198 g (1,5 Mol) n-Octanol (OHZ = 425), 23,7 g (0,1 Mol) Dimethylkokosamin, 0,3 g unterphosphorige Säure (50 %ig) und 40 ml Toluol vorgelegt. Unter Rühren wurden 115,2 g (1,0 Mol) Phosphorsäure (85 %ig) zugefügt. Anschließend wurde die Mischung zum kräftigen Sieden am Rückfluß erhitzt. Während der bei 130°C beginnenden Wasserabscheidung stieg die Temperatur auf 182 °C an. Nach 6 h waren insgesamt 42,6 g Wasser abgetrennt und die Reaktion wurde beendet.

Das Toluol wurde im Vakuum bei 20 mbar und einer Endtemperatur von 110 °C destillativ entfernt. Als Rückstand wurden 282,6 g einer farblosen, öligen Flüssigkeit erhalten.

Durch potentiometrische Mehrstufentitration, Bestimmung des Phosphor- und des Amingehalts wurde die Zusammensetzung des Rückstands wie folgt analysiert:

34,0 % Monoalkylester
42,4 % Dialkylester
11,8 % Trialkylester
3,4 % o-Phosphorsäure
0,0 % n-Octanol
8,4 % Dimethylkokosamin

Unter den gleichen Bedingungen wurden weitere erfindungsgemäße Zusätze verwendet.

| Bsp. | Zusatz | Ausbeute (g) | Zusammensetzung (%) | | | | | |
|---|---|---|---|---|---|---|---|---|
| | | | Monoester | Diester | Triester | o-Phosphors. | Octanol | Zusatz |
| 2 | Kaliumhydroxid | 261,6 | 30,2 | 60,0 | 0,0 | 0,8 | 7,1 | 1,9 |
| 3 | Kokosamin | 265,2 | 21,0 | 63,2 | 0,9 | 5,0 | 3,2 | 6,7 |
| 4 | Tributylamin | 275,5 | 37,9 | 45,1 | 3,4 | 2,2 | 5,0 | 6,4 |
| 5 | N-Lauryl diaminopropan | 266,5 | 31,1 | 40,8 | 13,1 | 5,2 | 5,3 | 4,5 |

Beispiel 6

In einer Apparatur, die wie im Beispiel 1 ausgerüstet war, wurden 195 g (1,5 Mol) 2-Ethylhexanol , 23,7 g (0,1 Mol) Dimethylkokosamin, 0,3 g unterphosphorige Säure (50 %ig) und 115,2 g (1,0 Mol) Phosphorsäure (85 %ig) in Gegenwart von 40 ml Toluol zur Reaktion gebracht.

Die Höchsttemperatur betrug dabei 161 °C und es wurden 43,6 g Wasser abgetrennt. Nach Entfernung des Toluols verblieben 270,1 g eines farblosen, öligen Rückstandes, der sich wie folgt zusammensetzte:

45,3 % Monosalkylester
26,4 % Dialkylester
3,8 % Trialkylester
6,2 % o-Phosphorsäure
10,1 % 2-Ethylhexanol
8,2 % Dimethylkokosamin

Beispiel 7

In einer Apparatur, die wie im Beispiel 1 ausgerüstet war, wurden 390 g (1,5 Mol) Talgalkohol (OHZ = 315,8; JZ = 1), 23,7 g (0,1 Mol) Dimethylkokosamin, 0,5 g unterphosphorige Säure (50 %ig) und 115,2 g (1,0 Mol) Phosphorsäure (85 %ig) in Gegenwart von 75 ml Toluol zur Reaktion gebracht. Bei einer Höchsttemperatur von 189 °C betrug die abgetrennte Wassermenge 45,3 g. Nach Entfernung des Toluols verblieben 487 g eines beim Abkühlen erstarrenden Rückstandes, der eine Jodzahl von 1,6 aufwies. Aus der Gesamtanalyse errechnete sich die folgende Zusammensetzung:

20,9 % Monoalkylester
42,1 % Dialkylester
18,1 % Trialkylester
4,9 % o-Phosphorsäure
7,5 % Talgalkohol
1,6 % Talgolefin
4,9 % Dimethylkokosamin

Beispiel 8

In einer dem Beispiel 1 entsprechenden Apparatur wurden 282 g (1,5 Mol) n-Dodecanol (OHZ = 298), 23,7 g (0,1 Mol) Dimethylkokosamin, 0,3 g unterphosphorige Säure (50 %ig) und 115,2 g (1,0 Mol) o-Phosphorsäure in Gegenwart von 40 ml Toluol umgesetzt. Bei einer Höchsttemperatur von 198 °C betrug die abgetrennte Wassermenge 45,0 g. Nach Entfernung des Toluols verblieben 375 g eines beim Abkühlen erstarrenden Rückstandes mit einer Jodzahl von 2,2. Die Zusammensetzung wurde wie folgt ermittelt:

28,0 % Monoalkylester
43,6 % Dialkylester
10,1 % Trialkylester
4,6 % o-Phosphorsäure
7,3 % n-Dodecanol
6,4 % Dimethylkokosamin

Beispiel 9

In einer dem Beispiel 1 entsprechenden Apparatur gelangten 273 g (0,75 Mol) eines mit 4 Mol Ethylenoxid umgesetzten Dodecyl-Tetradecylalkoholgemisches, 11,8 g (0,05 Mol) Dimethylkokosamin, 0,3 g unterphosphorige Säure (50 %ig), 57,6 g (0,5 Mol) o-Phosphorsäure (85 %ig) und 40 ml Toluol zum Einsatz. Nachdem bis zu einer Höchsttemperatur von 200 °C 23,8 g Wasser abgetrennt waren, wurde das Toluol entfernt und 307 g einer farblosen Flüssigkeit erhalten, die sich wie folgt zusammensetzte:

19,1 % Monoalkylester
52,3 % Dialkylester
16,5 % Trialkylester
0,6 % o-Phosphorsäure
7,8 % freier Alkohol
3,7 % Dimethylkokosamin

Beispiel 10

In einer dem Beispiel 1 entsprechenden Apparatur wurden 396 g (3,0 Mol) n-Octanol, 47,4 g (0,2 Mol) Dimethylkokosamin, 115,2 g (1,0 Mol) o-Phosphorsäure (85 %ig) und 50 ml Toluol zur Veresterung eingesetzt. Die Höchsttemperatur betrug 201 °C und die abgetrennte Wassermenge 59,1 g.

Der nach Entfernung des Toluols erhaltene Rückstand enthielt 38,9 % nicht umgesetztes n-Octanol, das sich aber destillativ bei einem Vakuum von 20 mbar und einer Sumpftemperatur von 170 °C annähernd quantitativ abtrennen ließ. Die Jodzahl des Destillats hatte einen Wert von 0,7. Daraus kann geschlossen werden, daß keine thermische Zersetzung von Ester zu Olefinen stattgefunden hat. Der Destillationsrückstand von 332 g hatte die folgende Zusammensetzung:

11,0 % Monoalkylester
57,6 % Dialkylester
17,6 % Trialkylester
0,6 % o-Phosphorsäure
0,2 % n-Octanol
13,0 % Dimethylkokosamin

Vergleichsbeispiel 1

Das Beispiel 1 wurde ohne Verwendung eines erfindungsgemäßen Zusatzes wiederholt. Nach 9,5 h Reaktionszeit bei maximal 178 ° C konnten 41,2 g Wasser abgetrennt werden. Dabei war die Reaktionstemperatur zum Schluß auf 158 ° C gesunken.

Die Rückstandsmenge nach Entfernung des Toluols betrug lediglich 197,6 g; das bei der Umsetzung als Nebenprodukt gebildete n-Octen war ebenfalls abdestilliert worden. Die Zusammensetzung des Rückstandes ergab sich wie folgt:

52,7 % Monoalkylester

38,0 % Dialkylester

7,3 % Trialkylester

1,0 % o-Phosphorsäure

1,0 % n-Octanol

Vergleichsbeispiel 2

Das Beispiel 8 wurde ohne Verwendung eines erfindungsgemäßen Zusatzes wiederholt. Nach Entfernung des Toluols verblieb ein Rückstand von 266,4 g, während die Destillatmenge 94,2 g betrug. Der Rückstand hatte eine Jodzahl von 60 und die Jodzahl des Destillats ergab einen Wert von 131. Für den Rückstand errechnete sich somit ein Gehalt von ca. 32 % n-Dodecan.

**Patentansprüche**

1. Verfahren zur Herstellung von Phosphorsäurealkylestergemischen und deren Amin- oder Alkanolaminsalzen, **dadurch gekennzeichnet,** daß man 1 bis 5 Moläquivalente

   a) eines 6 bis 18 C-Atome und vorzugsweise geradkettigen oder verzweigtkettigen 8 bis 18 C-Atome aufweisenden Fettalkohols,

   b) dessen 1 bis 20 und vorzugsweise 1 bis 12 Mol Ethylenoxid und/oder Propylenoxid aufweisenden Adduktes und/oder

   c) eines Adduktes von 1 bis 20 Mol Ethylenoxid und/oder Propylenoxid an Alkylphenole mit 8 bis 15 C-Atomen in den Alkylsubstituenten

   mit einem Moläquivalent o-Phosphorsäure in Gegenwart von 0,05 bis 0,2 Moläquivalenten, bezogen auf die in der Reaktionsmischung enthaltene Menge an Phosphoratomen, einer basischen organischen Verbindung und eines Wasserschleppmittels unter Auskreisen des Reaktionswassers direktverestert und gegebenenfalls in an sich bekannter Weise in die Alkalimetall, Ammonium- oder Alkanolaminsalze umwandelt.

2. Verfahren nach Anspruch 1, dadurch gekennzeichnet, daß der Fettalkohol ausgewählt ist aus der aus Hexylalkohol, 2-Ethylhexylalkohol, Heptylalkohol, Octylalkohol, Nonylalkohol, Isononylalkohol, Decylalkohol, Isodecylalkohol, Undecylalkohol, Dodecylalkohol, Tridecylalkohol, Isotridecylalkohol, Tetradecylalkohol, Pentadecylalkohol, Hexadecylalkohol, Heptadecylalkohol, Octadecylalkohol, Oleylalkohol, Elaidylalkohol und Isostearylalkohol bestehenden Gruppe.

3. Verfahren nach Anspruch 1, **dadurch gekennzeichnet,** daß man als basische organische Verbindungen Amine einsetzt.

4. Verfahren nach Anspruch 3, **dadurch gekennzeichnet,** daß man als basische organische Verbindungen Amine ohne zusätzliche funktionelle Gruppe im Molgewichtsbereich von 129 bis 297 einsetzt.

5. Verfahren nach Ansprüchen 1 bis 4, dadurch gekennzeichnet, daß das Wasserschleppmittel Toluol oder Xylol ist.

6. Verfahren nach Ansprüchen 1 bis 5, dadurch gekennzeichnet, daß die Veresterung bei wenigstens 160 ° C durchgeführt wird.

7. Verfahren nach Ansprüchen 1 bis 6, dadurch gekennzeichnet, daß der Fettalkohol durch Vakuumdestillation aus dem Reaktionsgemisch entfernt wird.

**8.** Verfahren zur Herstellung von Phosphorsäurealkylestergemischen nach den Ansprüchen 1 bis 7, **dadurch gekennzeichnet,** daß man die erhaltenen Phosphorsäurealkylestergemische in an sich bekannter Weise in ihre Alkalimetall-, Ammonium- und Alkanolaminsalze umwandelt.

## Claims

**1.** A process for the production of phosphoric acid alkyl ester mixture and amine and alkanolamine salts thereof, characterized in that 1 to 5 mol equivalents of

a) a $C_{6-18}$ fatty alcohol and preferably a linear or branched, $C_{8-18}$ fatty alcohol,

b) of which the adduct containing from 1 to 20 and preferably from 1 to 12 ethylene oxide and/or propylene oxide and/or

c) an adduct of 1 to 20 mol ethylene oxide and/or propylene oxide with alkylphenols containing from 8 to 15 carbon atoms in the alkyl substituents,

are directly esterified with one mol equivalent of o-phosphoric acid in the presence of 0.05 to 0.2 mol equivalent, based on the quantity of phosphorus atoms present in the reaction mixture, of a basic organic compound and a water-entraining agent with removal of the water of reaction from the reaction circuit and optionally converted into the alkali metal, ammonium or alkanolamine salts by methods known **per se**.

**2.** A process as claimed in claim 1, characterized in that the fatty alcohol is selected from the group comprising hexyl alcohol, 2-ethylhexyl alcohol, heptyl alcohol, octyl alcohol, nonyl alcohol, isononyl alcohol, decyl alcohol, isodecyl alcohol, undecyl alcohol, dodecyl alcohol, tridecyl alcohol, isotridecyl alcohol, tetradecyl alcohol, pentadecyl alcohol, hexadecyl alcohol, heptadecyl alcohol, octadecyl alcohol, oleyl alcohol, elaidyl alcohol and isostearyl alcohol.

**3.** A process as claimed in claim 1, characterized in that amines are used as the basic organic compounds.

**4.** A process as claimed in claim 3, characterized in that the basic organic compounds used are amines without an additional functional group and having a molecular weight of from 129 to 297.

**5.** A process as claimed in claims 1 to 4, characterized in that the water-entraining agent is toluene or xylene.

**6.** A process as claimed in claims 1 to 5, characterized in that the esterification is carried out at at least 160°C.

**7.** A process as claimed in claims 1 to 6, characterized in that the fatty alcohol is removed from the reaction mixture by vacuum distillation.

**8.** A process for the production of phosphoric acid alkyl ester mixtures as claimed in claims 1 to 7, characterized in that the phosphoric acid alkyl ester mixtures obtained are converted into their alkali metal, ammonium and alkanolamine salts by methods known **per se**.

## Revendications

**1.** Procédé d'obtention de mélanges d'esters alcoylés d'acide phosphorique et de leurs sels d'amine ou d'alcanolamine, caractérisé en ce que l'on estérifie directement 1 à 5 équivalents molaires

a) d'un alcool gras possédant 6 à 18 atomes de carbone et de préférence un alcool gras ayant de 8 à 18 atomes de carbone en chaîne droite ou ramifiée,

b) de son composé d'addition possédant de 1 à 20 et de préférence de 1 à 12 mol d'oxyde d'éthylène et/ou d'oxyde de propylène et/ou

c) d'un composé d'addition ayant de 1 à 20 mol d'oxyde d'éthylène et/ou d'oxyde de propylène, sur des alcoylphenols ayant de 8 à 15 atomes de carbone dans les substituants alcoylés,

avec un équivalent molaire d'acide ortho-phosphorique en présence de 0,05 à 0,2 équivalent molaire rapporté à la quantité renfermée dans le mélange réactionnel d'atomes de phosphore, d'un composé organique basique et d'un agent d'entraînement de l'eau tout en remettant en circulation l'eau de réaction et en ce que le cas échéant on convertit d'une manière connue en soi, en sels de métal alcalin, en sels d'ammonium ou en sels d'alcanolamine.

2. Procédé selon la revendication 1, caractérisé en ce que l'alcool gras est choisi dans le groupe constitué de l'alcool hexylique, l'alcool 2-éthylhexylique, l'alcool heptylique, l'alcool octylique, l'alcool nonylique, l'alcool isononylique, l'alcool décylique, l'alcool isodécylique, l'alcool undécylique, l'alcool dodécylique, l'alcool tridécylique, l'alcool isotridécylique, l'alcool tétradécylique, l'alcool pentadécylique, l'alcool hexadécylique, l'alcool heptadécylique, l'alcool octadécylique, l'alcool oléylique, l'alcool elaïdique et l'alcool isostéarylique.

3. Procédé selon la revendication 1, caractérisé en ce que l'on met en oeuvre comme composés organiques basiques, des amines.

4. Procédé selon la revendication 3, caractérisé en ce que l'on met en oeuvre comme composés organiques basiques, des amines sans groupe fonctionnel additionnel, dans la zone de poids moléculaire allant de 129 à 297.

5. Procédé selon les revendications 1 à 4, caractérisé en ce que l'agent d'entraînement de l'eau est le Toluène ou le Xylène.

6. Procédé selon les revendications 1 à 5, caractérisé en ce que l'estérification est effectuée à au moins 160°C.

7. Procédé selon les revendications 1 à 6, caractérisé en ce que l'alcool gras est éliminé par distillation sous vide du mélange réactionnel.

8. Procédé d'obtention de mélanges d'esters d'alcoyle de l'acide phosphorique selon les revendications 1 à 7, caractérisé en ce que l'on transforme les mélanges obtenues d'esters d'alcoyle d'acide phosphorique, d'une manière connue en soi en leurs sels de métal alcalin, d'ammonium, et d'alcanolamine.